# EUROPÄISCHE PATENTANMELDUNG

(11) **EP 3 123 870 A1**
(43) Veröffentlichungstag der Anmeldung: **01.02.2017**
(21) Anmeldenummer: 15178394.1
(22) Anmeldetag: 25.07.2015
(51) Int. Cl.: A23C 9/12, A23C 9/142

(54) **VERFAHREN ZUR HERSTELLUNG VON LACTOSEFREIEN MILCHPRODUKTEN**

(71) Anmelder: DMK Deutsches Milchkontor GmbH, 27404 Zeven (DE)
(72) Erfinder: Aschemann, Jan, 27404 Zeven (DE); Oehlckers, Thorben, 21244 Buchholz (DE); Döring, Sven-Rainer, 27404 Zeven (DE)
(74) Vertreter: Fabry, Bernd

(57) **Zusammenfassung**

Vorgeschlagen wird ein Verfahren zur Herstellung von Milchprodukten mit definiertem Lactosegehalt, umfassend die folgenden Schritte:
(a) Ultrafiltration einer Ausgangsmilch zur Erzeugung eines ersten Permeats P1 und eines ersten Retentats R1;
(b) Nanofiltration des ersten Permeats P1 zur Erzeugung eines zweite Permeats P2 und eines zweiten Retentats R2;
(c) Hydrolyse des zweiten Retentats R2 unter Zugabe von Lactase;
(d) Vermischen des ersten Retentats R1 mit jeweils einer solchen Menge des zweiten Permeats P2 sowie des Hydrolyseproduktes aus Schritt (c), so dass ein standardisiertes Milchprodukt erhalten wird, dessen Gehalt an Proteinen und Mineralien dem der Ausgangsmilch entspricht.

## Beschreibung

### GEBIET DER ERFINDUNG

Die Erfindung befindet sich auf dem Gebiet der lactosefreien Milcherzeugnisse und betrifft die Erzeugung von Milchprodukten mit gegenüber der Ausgangsmenge verminderten, jedoch definierten Lactosegehalten und weitgehend identischer Mineralienzusammensetzung, die sich in lactosefreie Produkte umwandeln lassen, ohne dabei eine Änderung des Geschmacksprofils der Ausgangsmilch aufzuweisen.

### STAND DER TECHNIK

Neugeborene Säugetiere bilden während ihrer Stillzeit das Enzym Lactase, welches das Disaccharid Milchzucker in die vom Stoffwechsel verwertbaren Zuckerarten D-Galactose und D-Glucose spaltet. Im Laufe der natürlichen Entwöhnung von der Muttermilch sinkt die Aktivität der Lactase auf etwa 5-10 % der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Lactasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Gegenstand der EP 1503630 B1 (VALIO) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen zweiwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren auf.

Die Aufgabe der vorliegenden Erfindung hat daher darin bestanden, ausgehend von Vollmilch, Magermilch oder standardisierter Milch, welche typisch zwischen 4 und 5 Gew.-% Lactose aufweist, eine an Lactose abgereicherte Milchzusammensetzung zur Verfügung zu stellen, die jedoch über die gleiche oder die im Wesentlichen gleiche Mineralienzusammensetzung wie die Ausgangsmilch verfügt, um auf diese Weise lactosefreie Produkte herstellen zu können, deren Geschmacksprofil dem der Ausgangsmilch entspricht.

### BESCHREIBUNG DER ERFINDUNG

Ein erster Gegenstand der vorliegenden Erfindung betrifft ein Verfahren zur Herstellung von Milchprodukten mit definiertem Lactosegehalt, beispielsweise etwa 0,5 bis etwa 2,5 Gew.-%, umfassend die folgenden Schritte:
(a) Ultrafiltration einer Ausgangsmilch zur Erzeugung eines ersten Permeats P1 und eines ersten Retentats R1;
(b) Nanofiltration des ersten Permeats P1 zur Erzeugung eines zweite Permeats P2 und eines zweiten Retentats R2;
(c) Hydrolyse des zweiten Retentats R2 unter Zugabe von Lactase;
(d) Vermischen des ersten Retentats R1 mit jeweils einer solchen Menge des zweiten Permeats P2 sowie des Hydrolyseproduktes aus Schritt (c), so dass ein standardisiertes Milchprodukt erhalten wird, dessen Gehalt an Proteinen und Mineralien dem der Ausgangsmilch entspricht.

In einer ersten speziellen Ausführungsform setzt man in Schritt (c) eine solche Menge Lactase ein, dass die im Produkt enthaltene Menge an Lactose vollständig in Glucose und Galaktose gespalten wird. Dies bedeutet, dass alle weiteren Prozessschritte mit einer bereits lactosefreien Milch durchgeführt werden, deren Mineralienkonzentration und Zusammensetzung noch an die der Ausgangsmilch angepasst werden muss.

In einer alternativen zweiten Ausführungsform umfasst das Verfahren den folgenden weiteren Schritt:
(e) Hydrolyse des standardisierten Milchproduktes aus Schritt (d) unter Zugabe einer solchen Menge an Lactase, dass die noch im Produkt enthaltene Restmenge an Lactose vollständig in Glucose und Galaktose gespalten wird.

Diese Ausführungsform der Erfindung kommt dann zum Tragen, wenn im Schritt (c) eine Menge an Lactase eingesetzt worden ist, die gerade nicht ausreicht, um die Gesamtmenge an Lactose zu spalten.

Überraschenderweise wurde gefunden, dass das erfindungsgemäße Verfahren das geschilderte Anforderungsprofil vollständig erfüllt. Dabei wird die Milch zunächst durch Ultrafiltration in eine proteinreiche/lactosearme und eine lactosereiche/proteinarme Fraktion aufgetrennt. Letztere wird in ihrem Lactosegehalt durch Nanofiltration noch einmal konzentriert, bevor sie einer Hydrolyse unterworfen wird, in der jeweils ein Molekül Lactose in ein Molekül Glucose und ein Molekül Galaktose gespalten wird. Anschließend wird das Hydrolyseprodukt der Proteinfraktion unter Zugabe des Permeats aus der Nanofiltration in solchen Mengen wieder zugesetzt ("Standardisierung"), dass sich die Protein- und Mineralienzusammensetzung der Ausgangsmilch wieder ergibt. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Vorzugsweise stellt man also den Gehalt an Glucose und Galaktose auf einen Wert ein, mit dem der Süßungsgrad der Ausgangsmilch erreicht wird. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

Als lactosefrei sind solche Produkte zu verstehen, die weniger als 0,1 Gew.-% und vorzugsweise weniger als 0,01 Gew.-% Lactose enthalten.

### ULTRAFILTRATION

Im ersten Verfahrensschritt wird die Ausgangsmilch, bei der es sich um Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% handeln kann, in eine proteinreiche und lactosearme sowie eine proteinarme und lactosereiche Fraktion aufgetrennt.

Die Ultrafiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off*") bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Ultrafiltration unter Zugabe einer solchen Menge Diawassers durchgeführt, dass ein erstes Retentat mit einem Verdünnungsfaktor von etwa 5 bis etwa 20 erhalten und vorzugsweise etwa 8 bis 12 erhalten wird.

Für die Ultrafiltration haben sich Membranen als besonders geeignet erwiesen, die einen Porendurchmesser im Bereich von etwa 1.000 bis etwa 50.000 und vorzugsweise etwa 2.000 bis etwa 25.000 Dalton besitzen. Dem hingegen bevorzugt beispielsweise die Nanofiltration Porendurchmesser im Bereich von 100 bis 1.000 und vorzugsweise etwa 150 bis etwa 800 Dalton.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration kann im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 4 bis etwa 25 °C und insbesondere etwa 8 bis etwa 18 °C zu arbeiten.

### NANOFILTRATION

Im zweiten Verfahrensschritt wird das Permeat der Ultrafiltration, das reich an Lactose ist, einer Nanofiltration unterworfen, bei der ein Retentat erhalten wird, das weiter an Lactose und Mineralien aufkonzentriert ist. Bei dem Permeat handelt es sich um mehr oder weniger reines Wasser, das noch maximal 0,5 Gew.-% Salze enthält.

Die Nanofiltration kann wie oben beschrieben unter den gleichen Bedingungen und mit den gleichen Bauteilen durchgeführt werden. Dabei kommen jedoch Membranen in Betracht, die einen Porendurchmesser im Bereich von etwa 100 bis etwa 1.000 Dalton und vorzugsweise etwa 150 bis 250 Dalton.

### HYDROLYSE

Lactose gehört zur Gruppe der Disaccharide und besteht aus den beiden Molekülen D-Galaktose und D-Glucose, die über eine β-1,4-glycosidische Bindung verbunden sind.

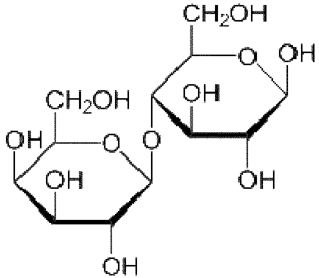

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C, vorzugsweise im Bereich von 20 bis 30°C sowie einem leicht sauren pH-Wert von etwa 5 bis 6 durchzuführen.

### VERMISCHEN

Der Mischungsschritt dient der Herstellung eines standardisierten lactosefreien Milchproduktes, Dazu wird dem im ersten Schritt erhaltenen proteinreichen ersten Retentat definierte Mengen an Kohlenhydraten und Mineralien zugesetzt. Ziel ist es insbesondere, ein Produkt zu erhalten, das gegenüber der Ausgangsmilch eine entsprechend angepasste Zuckerkonzentration aufweist, d.h. der Süßungsgrad gleich bleibt. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des Hydrolyseproduktes zusetzt, dass sich eine Konzentration an Glucose und Galaktose von gemeinsam etwa 1,0 bis etwa 3,5 Gew.-% und vorzugsweise etwa 1,5 bis etwa 3,0 Gew.-% - bezogen auf die resultierende Standardmilchergibt;
(ii) eine solche Menge des zweiten Permeats P2 zusetzt, dass sich eine Mineralienkonzentration von etwa 0,6 bis etwa 1,0 Gew.-% - bezogen auf die resultierende Standardmilch-ergibt.
(iii) eine solche Menge des zweiten Permeats P2 zusetzt, so dass sich durch die Verdünnung eine Proteinkonzentration von etwa 3,5 bis etwa 4,0 Gew.-% - bezogen auf die resultierende Standardmilch -ergibt.

### REFERENZZEICHEN IN DER ABBILDUNG

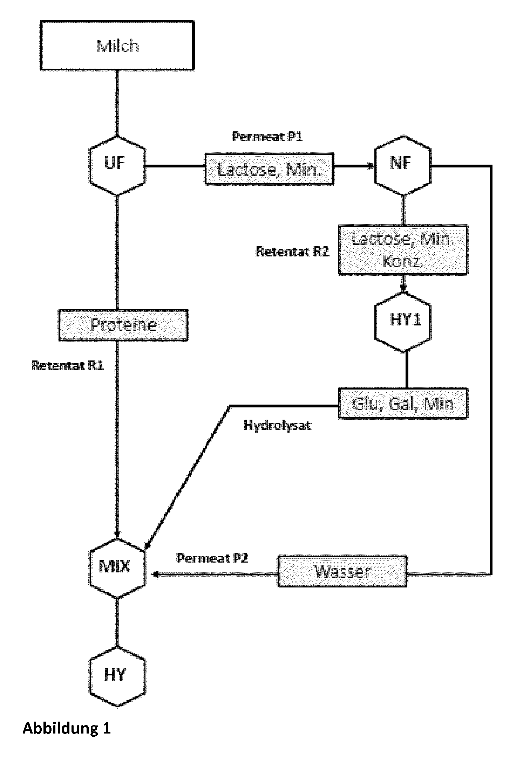

Das erfindungsgemäße Verfahren wird schematisch in **Abbildung 1** zusammengefasst. Dabei bedeuten die Abkürzungen:
- UF: = Ultrafiltration
- NF: = Nanofiltration
- MIX: = Vermischung
- HY: = Hydrolyse
- Glu: = Glucose
- Gal: = Galaktose
- Min: = Mineralien

**BEISPIEL 1**

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurde bei 10°C einer ersten Ultrafiltration unter Zugabe von Diawasser unterworfen. Der Verdünnungsfaktor betrug 10, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | 0,4 |
| Proteine | 11,0 |
| Mineralien | 0,08 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | 4,0 |
| Proteine | < 0,1 |
| Mineralien | 0,8 |

Das Permeat P1 wurde anschließend bei 10 °C einer Nanofiltration mit einer Membran mit einer Porenweite von 800 Dalton unterworfen, wobei ein zweites Retentat R2 mit einer Trockenmasse von etwa 18 Gew.-% und folgender Zusammensetzung erhalten wurde:

| **RETENTAT R2** | **Menge [Gew.-%]** |
|---|---|
| Lactose | 13,0 |
| Proteine | < 0,1 |
| Mineralien | 2,0 |

Gleichzeitig wurde ein zweites Permeat P2 erhalten, welches aus Wasser mit einem Gehalt von 0,3 Gew.-% Salzen bestand.

Das zweite Retentat R2 wurde in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLOYSEPRODUKT** | **Menge [Gew.-%]** |
|---|---|
| Lactose | <0,1 |
| Glucose | 13,0 |
| Galaktose | 13,0 |
| Proteine | <0,1 |
| Mineralien | 2,0 |

Anschließend wurde das Retentat R1 mit einer solchen Menge an Hydrolyseprodukt sowie des zweiten Permeats P2 versetzt, dass eine standardisierte Milch der folgenden Zusammensetzung resultierte:

| **STANDARDMILCH** | **Menge [Gew.-%]** |
|---|---|
| Lactose | <0,1 |
| Glucose | 1,0 |
| Galaktose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf. Die Gesamtmenge an Kohlenhydraten (Glucose + Galaktose) betrug 2 Gew.-% Auf diese Weise wurde eine lactosefreie Milch erhalten, die den gleichen Süßungsgrad und das gleiche Geschmacksprofil wie die ursprüngliche Milch aufwies.

## Patentansprüche

1. Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Nanofiltration des ersten Permeats P1 zur Erzeugung eines zweite Permeats P2 und eines zweiten Retentats R2;
(c) Hydrolyse des zweiten Retentats R2 unter Zugabe von Lactase;
(d) Vermischen des ersten Retentats R1 mit jeweils einer solchen Menge des zweiten Permeats P2 sowie des Hydrolyseproduktes aus Schritt (c), so dass ein standardisiertes Milchprodukt erhalten wird, dessen Gehalt an Proteinen und Mineralien dem der Ausgangsmilch entspricht.

2. Verfahren nach Anspruch 1, **dadurch gekennzeichnet, dass** man in Schritt (c) eine solche Menge Lactase einsetzt, dass die im Produkt enthaltene Menge an Lactose vollständig in Glucose und Galaktose gespalten wird;

3. Verfahren nach Anspruch 1, **dadurch gekennzeichnet, dass** es als weiteren Schritt umfasst:
(e) Hydrolyse des standardisierten Milchproduktes aus Schritt (d) unter Zugabe einer solchen Menge an Lactase, dass die noch im Produkt enthaltene Restmenge an Lactose vollständig in Glucose und Galaktose gespalten wird.

4. Verfahren nach mindestens einem der Ansprüche 1 bis 3, **dadurch gekennzeichnet, dass** man als Ausgangsmilch Vollmilch, Magermilch oder Standardmilch einsetzt.

5. Verfahren nach mindestens einem der Ansprüche 1 bis 4, **dadurch gekennzeichnet, dass** man eine Ausgangsmilch einsetzt, die einen Lactosegehalt im Bereich von etwa 3 bis etwa 5 Gew.-% aufweist.

6. Verfahren nach mindestens einem der Ansprüche 1 bis 5, **dadurch gekennzeichnet, dass** man die Ultrafiltration mit Hilfe einer Membran durchführt, die einen Porendurchmesser von etwa 1.000 bis etwa 50.000 Dalton durchführt.

7. Verfahren nach mindestens einem der Ansprüche 1 bis 6, **dadurch gekennzeichnet, dass** man die Ultrafiltration mit einem Volumenverdünnungsfaktor im Bereich von 5 bis etwa 20 durchführt.

8. Verfahren nach mindestens einem der Ansprüche 1 bis 7, **dadurch gekennzeichnet, dass** man die Ultrafiltration mit einem Volumenverdünnungsfaktor im Bereich von 8 bis etwa 18 durchführt.

9. Verfahren nach mindestens einem der Ansprüche 1 bis 8, **dadurch gekennzeichnet, dass** man die Ultrafiltration bei Temperaturen im Bereich von etwa 4 bis etwa 25 °C durchführt.

10. Verfahren nach mindestens einem der Ansprüche 1 bis 9, **dadurch gekennzeichnet, dass** man die Nanofiltration mit einer Membran durchführt, die einen Porendurchmesser im Bereich von etwa 100 bis etwa 1.000 Dalton aufweist.

11. Verfahren nach mindestens einem der Ansprüche 1 bis 10, **dadurch gekennzeichnet, dass** man die Nanofiltration bei Temperaturen im Bereich von etwa 4 bis etwa 25 °C durchführt.

12. Verfahren nach mindestens einem der Ansprüche 1 bis 11, **dadurch gekennzeichnet, dass** man dem ersten Retentat R1 eine solche Menge des Hydrolyseproduktes zusetzt, dass sich eine Konzentration an Glucose und Galaktose von gemeinsam etwa 1,0 bis etwa 3,5 Gew.-% - bezogen auf die resultierende Standardmilch - ergibt.

13. Verfahren nach Anspruch 12, **dadurch gekennzeichnet, dass** man dem ersten Retentat R1 eine solche Menge des Hydrolyseproduktes zusetzt, dass sich eine Konzentration an Glucose und Galaktose von gemeinsam etwa 1,5 bis etwa 3,0 Gew.-% - bezogen auf die resultierende Standardmilch - ergibt.

14. Verfahren nach mindestens einem der Ansprüche 1 bis 11, **dadurch gekennzeichnet, dass** man dem ersten Retentat R1 eine solche Menge des zweiten Permeats P2 zusetzt, dass sich eine Mineralienkonzentration von etwa 0,6 bis etwa 1,0 Gew.-% - bezogen auf die resultierende Standardmilch - ergibt.

15. Verfahren nach mindestens einem der Ansprüche 1 bis 14, **dadurch gekennzeichnet, dass** man dem ersten Retentat R1 eine solche Menge des zweiten Permeats P2 zusetzt, so dass sich durch die Verdünnung eine Proteinkonzentration von etwa 3,5 bis etwa 4,0 Gew.-% - bezogen auf die resultierende Standardmilch - ergibt.
